# EUROPEAN PATENT APPLICATION

(11) **EP 3 552 959 A1**
(43) Date of publication of application: **16.10.2019**
(21) Application number: 19168188.1
(22) Date of filing: 09.04.2019
(51) Int. Cl.: B64C 23/06

(54) **AERODYNAMICS INFLUENCING DEVICE FOR AN AIRCRAFT AND AIRCRAFT**

(30) Priority: 13.04.2018 DE 102018108865
(71) Applicant: Airbus Defence and Space GmbH, 82024 Taufkirchen (DE)
(72) Inventor: Langenbacher, Peter, 80807 München (DE)
(74) Representative: Isarpatent

(57) **Abstract**

The invention relates to an aerodynamic device (1, 11), in particular an aerodynamic device for an aircraft comprising a frame (2), a skin (6) forming an aerodynamic surface and connected to the frame (2) and comprising a motile portion (4) adapted to be displaced between a first position in which the aerodynamic surface exhibits a first shape, and a second position different from the first position, characterized in that it comprises a disturbing structure (3), and in the second position of the motile portion (4), the aerodynamic surface exhibits a second shape in which the disturbing structure (3) induces a protrusion (14) on the aerodynamic surface.

## Description

The invention relates to an aerodynamic device. The invention aims at providing an aerodynamics influencing device for an aircraft for improving the aerodynamics of a vehicle. The invention particularly relates to an aerodynamic device for an aircraft, as well as to a wing for an aircraft and an aircraft.

It is generally sought to have aerodynamic devices such as wings or flight control surfaces of an aircraft with different characteristics at different moments of its operation. For example during landing or take-off a high lift is needed at relatively low speed. Therefore the shape of a wing may be modified to provide for a higher angle of attack to provide for a higher lift, or a different aerodynamic shape. However high angle of attack or deceleration may lead to separation or stall of the air flow around the wing such that all lift is lost, leading to critical situations. Although the lift may not be lost, it is in such situations lower such that the climb angle of the aircraft after take-of is more flat. Also the drag is higher and leads to higher fuel consumption.

The modification of the wing is usually made by motile parts such as a flaps to increase lift in certain operation modes. In order to improve the aerodynamic efficiency and/or enhance the fuel efficiency and/or reduce the airframe weight and/or reduce the noise during takeoffs and landings of the aircraft and more particularly of the wing of an aircraft, it has been proposed to use morphing wings with continuous surface change. The document WO2016046787 discloses a morphing wing comprising a flexible skin mounted on an articulated frame. This allows to modify the shape of the wing based on the operation mode of the aircraft. However articulated parts of a frame are complex and subject to failure, which may become critical in an aircraft.

Besides, this type of wing does not avoid the stall of the air flow around the wing at high angles of attack, and does not delay the separation of the air flow around the wing.

The invention aims to propose an aerodynamic device such as a sustentation device or a control surface device which allows high angles of attack without separation or stall.

The invention aims to propose a device which is simple to manufacture, is not subject to actuation failure, and can be maintained easily and at low costs.

The invention aims at enhancing the operating range and application area and adjustability towards the operation mode of morphing wings, flaps, slats, etc.

The invention proposes an aerodynamic device comprising:
- a frame,
- a skin:
   - having an outer surface forming at least part of an aerodynamic surface,
   - at least partially connected to the frame, and
   - comprising a motile portion adapted to be displaced between:
      ∘ a first position in relation to the frame, in which the aerodynamic surface exhibits a first shape,
      ∘ a second position in relation to the frame, the second position being different from the first position,
characterized in that:
- it comprises a disturbing structure,
- in the second position of the motile portion, the aerodynamic surface exhibits a second shape, different from the first shape, in which the disturbing structure induces a protrusion on the aerodynamic surface.

The device may be an aerodynamic device for a vehicle, such as an aircraft, a boat, a car, a truck, a train, etc. The aerodynamic device of the invention is beneficially an aerodynamic device for an aircraft, in particular an aerodynamics influencing device for an aircraft. Therefore, when the aircraft is in use, the device according to the invention is in an air flow. The device may be a portion of or a whole sustentation device for an aircraft, for example a portion of a wing, a blade, a horizontal tail plane, a vertical tail plane, a stabilizer, etc.. The device may be a portion of or a whole control surface device such as for example a flap, an aileron, a slat, a spoiler, a rudder, an elevator, etc.. However, the device may also be part of a fuselage whereby the outer surface of the fuselage's skin influences the airflow around the fuselage by the displacement of the motile portion between at least the first position and the second position.

The frame may be assimilated to a chassis or a structure of the device and/or of a bigger system in which the device is installed or integrated. In particular the frame of the aerodynamic device according to the invention may be a portion of a frame of an aircraft.

The skin, may be any skin of an aircraft which covers portions of an aircraft to form an aerodynamic surface and allow its flight and/or its displacement and/or its control in an air flow. The shape of the skin is adapted to obtain a certain expected air flow around it so as to provide certain flight operations to the aircraft in terms of sustentation or flight control for example.

The skin comprises at least a portion connected to the frame, called fixed portion. In particular the skin of the fixed portion may be attached to the frame, directly or indirectly through intermediate fixed or moveable structures, such that it is attached to the frame. The fixed portion may for example be the fixed portion of a wing or of a vertical tail plane.

The motile portion is a motile portion of the aerodynamic device.

The motile portion is motile between a first position and a second position and may take a plurality of other positions at least intermediary positions between the first position and the second position, but also in some embodiments beyond the first position and/or the second position. When the device according to the invention is in an air flow, the air flow around the skin of the device with the motile portion in the first position is different from the air flow around the skin of the device with the motile portion in the second position.

The motile portion may be at least part of a sustentation device or control surface such as a flap, an aileron, a slat, a spoiler, a vertical or horizontal tail plane, a rudder, an elevator, a stabilizer, etc.. The motile portion may be an articulated and/or a deformable portion of the skin. In particular the motile portion may be the deformable portion of a so-called 'morphing' sustentation device or control surface such as for example a morphing wing.

The displacement of the motile portion allows the disturbing structure to protrude or induce a protrusion on the aerodynamic surface of the device. A protrusion is used in the whole text as a generic word for bump or recess, that is a local variation of curvature of higher amplitude than the general or surrounding variation of curvature of the aerodynamic surface.

The disturbing structure influences the shape of the aerodynamic surface, in particular of the outer surface of the skin of the device such that the shape of the aerodynamic surface is different with the motile portion in the first position and with the motile portion in the second position. Thereby a different air flow may be obtained along the aerodynamic surface, depending on the position of the motile portion in relation to the frame. The disturbing structure is adapted to disturb the flow of air along the aerodynamic surface of the device, so as to influence the way in which the air flows around the skin.

Indeed, with a different shape of the device, the air flow around the skin of the device is different, such that modifying the outer shape of the skin of the device may be beneficial to obtain a beneficial air flow. For example when the device is a portion of a wing or a whole wing, and the motile portion is a flap, the air flow may separate from the extrados of the flap and/or of the wing for high-lift positions of the flap due to its high angle of attack. The presence of one or more disturbing structure(s) provides a different outer shape of the skin at different positions of the motile portion, such that the air flow may be modified or adapted to the position of the motile portion. In the example above the disturbing structure may be adapted to create small vortices along the extrados so as to limit or exclude any separation of the air flow from the extrados of the flap or of the wing.

The disturbing structure can take many different shapes and sizes, depending on the aircraft type, on the aircraft size, on the placement of the device according to the invention on the aircraft.

The disturbing structure may be adapted to create many types of shape modification of the skin such as for example one or many protrusion, ridge, etc.

The disturbing structure is beneficially a rigid structure, that is a structure that will not undergo significant deformation under the application of aerodynamic loads, nor under loads applied to it by the motile portion of the fixed portion.

The disturbing structure itself is not actuated ; that is there is no actuation device dedicated to actuating the disturbing structure which may be fixed in relation to the motile portion, fixed in relation to the skin, or fixed in relation to the frame. The disturbing structure does not require any additional system for its control. The disturbing structure is a passive structure of the aircraft. The disturbing structure beneficially does not comprise joints or motile parts. The disturbing structure beneficially comprises only rigid pieces attached together, or one rigid piece, attached to the fixed portion or to the motile portion of the aerodynamic device.

The disturbing structure may be integral with the frame.

The disturbing structure is thus very simple to manufacture and to implement. Besides the disturbing structure does not require complex maintenance, and may not fail during flight.

The invention therefore provides an aerodynamics influencing device which has different surface characteristics depending on the position of the motile portion. This may allow to modify the aerodynamic behavior of such device. For example, when the device is a wing or a portion of a wing, and the motile portion is a control surface of the wing such as for example a flap, the modification of the shape of the skin, and therefore of the aerodynamic surface of the device may allow displacing the stall angle towards a higher angle of attack, thus providing a high lift at very low speed without stall.

The disturbing structure may be fixed in relation to the frame

The disturbing structure may be attached to the frame. The disturbing structure may be directly or indirectly - that is through additional intermediate part(s) - attached to the frame such that it may be maintained fixed in relation to the frame. In such embodiments of the invention, the disturbing structure is fixed in relation to the fixed portion of the skin, and therefore has a different position in relation to the motile portion when the motile portion is in the first position and when the motile portion is in the second position.

A disturbing structure fixed in relation to the frame is adapted to induce a protrusion on the aerodynamic surface of the motile portion. A disturbing structure fixed in relation to the frame induces a protrusion on the aerodynamic surface of the motile portion at least when the motile portion is in the second position.

With a motile portion articulated around a rotation axis in relation to the frame, the disturbing structure fixed in relation to the frame may extend from the frame beyond the rotation axis, toward the motile portion. For example in embodiments in which the motile portion is a wing flap situated in the aft portion of the wing, the disturbing structure fixed in relation to the frame may extend behind the rotation axis of the motile portion.

The disturbing structure may be fixed in relation to the motile portion.

The disturbing structure may be attached to the motile portion. In such embodiments of the invention, the disturbing structure has a different position in relation to the fixed portion of the skin when the motile portion is in the first position and when the motile portion is in the second position.

A disturbing structure fixed in relation to the motile portion is adapted to induce a protrusion on the aerodynamic surface of the fixed portion. A disturbing structure fixed in relation to the motile portion induces a protrusion on the aerodynamic surface of the fixed portion at least when the motile portion is in the second position.

With a motile portion articulated around a rotation axis in relation to the frame, the disturbing structure fixed in relation to the motile portion may extend from the motile portion beyond the rotation axis, toward the frame or a portion of the surface of the device fixed to the frame. For example in embodiments in which the motile portion is a wing flap situated in the aft portion of the wing, the disturbing structure fixed in relation to the flap may extend in front of the rotation axis of the motile portion and form a protrusion on the wing.

More generally, in embodiments of the invention in which the motile portion is articulated around a rotation axis compared to a reference portion, a disturbing structure fixed in relation to the reference portion may extend from the reference portion beyond the rotation axis, toward the motile portion. Alternatively or in combination, a disturbing structure fixed in relation to the motile portion may extend from the motile portion beyond the rotation axis, toward the reference portion.

Furthermore, a device according to the invention may comprise a plurality of disturbing structures, at least one being fixed in relation to the frame so as to induce a protrusion on the aerodynamic surface of the motile portion, and/or at least one being fixed in relation to the motile portion so as to induce a protrusion on the aerodynamic surface of the fixed portion.

The skin may comprise a deformable portion, called deformable skin.

The deformable skin may be on the fixed portion and/or on the motile portion. The deformable skin may in some embodiment constitute the motile portion. Moreover, the deformable skin may not be limited to the fixed portion or the motile portion.

The deformable skin is may be flexible. The deformable skin may comprise at least one elastic portion. Alternatively or in combination the deformable skin may be deformable thanks to other features such as for example slits or folds. Alternatively or in combination, the deformable skin may comprise at least a portion comprising a memory shape material such as a memory shape alloy for example.

The deformable skin is a skin that may change shape. More particularly the deformable skin is a skin that may change shape under the influence of the disturbing structure. The shape of the deformable skin may only locally change. The deformable skin may change shape when submitted to a load at least partially applied by the disturbing structure. In particular the deformable skin may change shape when submitted to a transverse load (a load at least partially orthogonal to the plane of the skin) at least partially applied by the disturbing structure. The load may actually be applied by an actuating device actuating the motile portion, while the disturbing structure locally applies a restriction of the movement of the deformable skin of the motile portion, such that the deformable skin locally deforms.

The skin may be entirely deformable.

In the case of a morphing wing for example, the entire skin of the wing may be deformable.

In at least one position of the motile portion, the deformable skin may be at least partially in contact against a disturbing structure.

The disturbing structure restrains and/or controls and/or at least participates in the control of the shape of the deformable skin. The deformable skin is at least locally hold by a disturbing structure of the frame and/or flexible portion and/or motile portion.

A device according to the invention may further be adapted so that:
- in the first position of the motile portion, the deformable skin has a first shape,
- in the second position of the motile portion, the deformable skin is at least partially restrained by the disturbing structure, such that the deformable skin has a second shape, different from the first shape.

The displacement of the motile portion allows the disturbing structure to induce a protrusion on the deformable skin. The deformable skin may be on a reference portion or fixed portion compared to the motile portion, such that the disturbing structure fixed in relation to the motile portion may be displaced against the deformable skin when the motile portion is displaced. Similarly, the deformable skin may be on the motile portion compared to the frame or reference portion, such that the disturbing structure fixed compared to the frame or reference portion may be displaced against the deformable skin when the motile portion is displaced.

Alternatively or in combination, the mere deformation of the deformable skin may be influenced by the presence of the disturbing structure.

The disturbing structure:
- may at least partially be attached to the deformable skin,
- may be adapted to modify locally the deformability of the deformable skin.

The disturbing structure may be adapted to modify locally the deformability of the deformable skin by locally modifying the mechanical properties of the assembly made of the deformable skin and the disturbing structure. The disturbing structure may for example act as a local stiffener of the deformable skin, such that the deformation of the deformable skin when the motile portion is displaced may vary locally so as to form a protrusion.

In the first position of the motile portion, the disturbing structure may at least partially support the deformable skin in its first shape.

The disturbing structure may provide support to the deformable skin in at least one position of the motile portion. This allows to ensure that the deformable skin keeps its shape in this position of the motile portion. Indeed a deformable skin's shape may be influenced by the air flow against it as the air flow itself may induce differently the pressure on the deformable skin depending on the characteristics of the air flow (speed, nature, etc.). As the skin of the motile portion and/or fixed portion may be flexible or elastic, it may be subjected to deformation due to the variation of pressure applied by the air flow flowing on the skin. For example the air flow may form local vortices which may apply uneven pressure on the skin. The disturbing structure being placed on the inner side of the skin, the disturbing structure supports the skin at least against pressure differential between the inner face of the skin and the outer face of the skin that would tend to push the skin inwardly. Moreover, in some embodiments, the disturbing structure may be attached - for example by riveting or gluing - to the skin so that it may also maintain the skin in place against pressure differential tending to push the skin outwardly.

This may be obtained by a simple contact between the disturbing structure and the deformable skin, in particular without exertion of a load - and in particular a transversal load - on the deformable skin by the disturbing structure, and thus without inducing a deformation of the deformable skin.

Alternatively this may be obtained with the disturbing structure applying a load on the deformable skin, in particular a load adapted to induce a tension in the deformable skin, such that the deformable skin better holds a given shape, even with an air flow flowing along the deformable skin, including for example turbulent air flows.

In the second position of the motile portion, the disturbing structure induces a protrusion on the deformable skin. The protrusion of the deformable skin forms a local protrusion on the aerodynamic surface.

In the second position of the motile portion, the disturbing structure is adapted to at least partially restrain the deformable skin, such that the deformable skin comprises a local protrusion. The disturbing structure may induce a local protrusion on the deformable skin.

The protrusion (or bump) formed is adapted to create local vortices when the skin is placed in a fluid flow. Thereby the boundary layer of the flow is disturbed by the protrusion formed on the skin's outer surface.

The deformable skin may comprise a slit and, in the second position of the motile portion, the disturbing structure restrains a first side of the slit differently that the second side of the slit.

In particular the disturbing structure may exert a restraint on the first side of the slit and exert no action on the second side of the slit. Thereby the slit may for example be closed in the first position of the motile portion, that is each side of the slit are level with each other. In a second position of the motile portion, the slit may be open, with a first side of the slit being higher than a second side of the slit such that the skin displays a discontinuity between a first side of the slit and a second side of the slit. Such discontinuity may be adapted to create a vortex when the device is placed in an air flow.

A device according to the invention may be characterized in that:
- the skin comprises an aperture,
- in the first position of the motile portion, the skin and a surface of the disturbing structure form a first aerodynamic surface,
- in the second position of the motile portion, the skin and a surface of the disturbing structure form a second aerodynamic surface, different from the first aerodynamic surface.

A device according to the invention may be characterized in that:
- the skin comprises an aperture,
- in the first position of the motile portion, the skin and a surface of the disturbing structure form a continuous aerodynamic surface,
- in the second position of the motile portion, the skin and a surface of the disturbing structure form a discontinuous aerodynamic surface.

The disturbing structure may locally protrude from the skin's surface, such that it forms a discontinuity on the aerodynamic surface. Such discontinuity may be adapted to form local vortices in an air flow flowing along the aerodynamic surface, so as to ensure that the air flow remains along the aerodynamic surface. This may be very beneficial to modify the angle of stall of an aerodynamics influencing device according to the invention, such that higher angles of attack are possible without stall on such device. This may allow displacing the stall angle towards a higher angle of attack.

The aperture may have any shape. It may for example be a slit through which a thin end of the disturbing structure slides when the motile portion is displaced between a first position and a second position. The slit may extend between 45 degrees and 135 degrees, for example orthogonally, with the air flow flowing around the skin during use of the device, in particular during the flight of the aircraft.

In the second position of the motile portion, the disturbing structure may protrude from the skin.

More particularly, in the second position of the motile portion, the disturbing structure protrudes from the outer surface of the skin, such that it forms a protrusion of the aerodynamic surface.

The disturbing structure may be protruding from the skin in a first manner in the first position of the motile portion, and in a second manner, different from the first manner in the second position of the motile portion. The first and second manner of protruding may for example differ by the angle between the surface of the disturbing structure and the skin, and/or by the length of the protrusion formed by the disturbing structure on the aerodynamic surface.

The motile portion may form at least part of a trailing edge of a wing.

The motile portion may beneficially constitute at least part of the trailing portion of a wing. The motile portion may for example form a flap. The formation of irregularities such as protrusion(s) on the aerodynamic surface of a wing, and in particular of a flap, may be beneficial at low speeds such as take-off and/or landing speeds. Indeed at such low speeds a high lift for a low speed compared to the ground is sought, and the angle of attack of the wing (respectively of the flap) is very high. Therefore displacing the stall angle towards a higher angle of attack is particularly beneficial to provide a high lift without stall relatively low speeds.

The motile portion may be a morphing trailing edge of a wing.

The motile portion may alternatively form at least part of a vertical tail plane or of an horizontal tail plane. The motile portion may alternatively form at least part of another sustentation device and/or flight control device of an aircraft.

An aerodynamic device according to the invention may comprise a plurality of disturbing structures.

The frame and/or the flexible portion and/or the motile portion may comprise a plurality of disturbing structures. The disturbing structures may be so arranged as to form no protrusion on the aerodynamic surface in at least one position of the motile portion(s). The disturbing structures may be so arranged as to form at least a protrusion on the aerodynamic surface in a first position of a motile portion and at least a second different protrusion on the aerodynamic surface in a second position of said motile portion.

In particular, the device may comprise a plurality of disturbing structures along its length or along its width. At least one first disturbing structure may be fixed in relation to the frame, that is fixed in relation to the fixed portion, and/or at least one second disturbing structure may be fixed in relation to at least one motile portion.

The plurality of disturbing structure may be adapted to form a pattern on the aerodynamic surface. It may further be adapted to form a plurality of different patterns for different positions of the motile portion.

The invention also extends to a wing for an aircraft comprising at least a device according to the invention.

The wing may be a so-called 'morphing wing' comprising at least a deformable portion. The morphing wing may comprise a motile portion forming a deformable trailing portion instead of or in combination with a control surface such as for example a flap or an aileron. The morphing wing may comprise a motile portion forming a deformable leading edge portion instead of or in combination with a control surface such as for example a slat.

The wing may comprise a plurality of disturbing structures along the wing span and/or along the wing chord. At least one disturbing structure may be fixed to the frame, for example to a rib or a spar. Alternatively or in combination, at least one disturbing structure may be fixed to a motile portion, for example to a flap or an aileron.

The invention also extends to an aircraft comprising at least a device according to the invention.

An aircraft may comprise a plurality of disturbing structures along the wing span and/or along the wing chord of a sustentation device, such as a wing for example.

Some specific exemplary embodiments and aspects of the invention are described in the following description in reference to the accompanying figures.
Figure 1A is a schematic representation of a transversal cross-section of a wing comprising an embodiment of a device according to the invention in a first configuration,
Figure 1B is a schematic representation of a longitudinal cross-section IB-IB of a wing according to the embodiment of figure 1A,
Figure 2 is a schematic representation of a transversal cross-section of the device of figure 1A in a second configuration,
Figure 3A is a schematic representation of a transversal cross-section of the device of the figures 1 and 2 in a third configuration,
Figure 3B is a schematic representation of a longitudinal cross-section IIIB-IIIB of a wing according to the embodiment of figure 3A,
Figure 4 is a schematic side representation of a vertical tail plane of an aircraft comprising an embodiment of a device according to the invention, with a broken-out section.
Figure 5 is a schematic representation of a transversal cross-section V-V of the device of figure 4 in a first configuration,
Figure 6 is a schematic representation of a transversal cross-section V-V of the device of figure 4 in a second configuration,
Figure 7 is a schematic representation of a transversal cross-section of a wing comprising an embodiment of a device according to the invention in a first configuration,
Figure 8 is a schematic representation of a transversal cross-section of the device of figure 7 in a second configuration,
Figure 9 is a schematic representation of a transversal cross-section of a wing comprising an embodiment of a device according to the invention in a first configuration,
Figure 10 is a schematic representation of a longitudinal cross-section X-X of the device of figure 9,
Figure 11 is a schematic representation of a transversal cross-section of the device of figure 9 in a second configuration,
Figure 12 is a schematic representation of a longitudinal cross-section XII-XII of the device of figure 11,
Figure 13 is a schematic representation of a transversal cross-section of a wing comprising an embodiment of a device according to the invention in a first configuration,
Figure 14 is a schematic representation of a longitudinal cross-section XIV-XIV of the device of figure 13,
Figure 15 is a schematic representation of a transversal cross-section of the device of figure 13 in a second configuration,
Figure 16 is a schematic representation of a longitudinal cross-section XVI-XVI of the device of figure 15,
Figure 17 is a schematic representation of a transversal cross-section of a vertical tail plane of an aircraft comprising an embodiment of a device according to the invention, in a first configuration,
Figure 18 is a schematic representation corresponding to the embodiment shown in figure 17, in a second configuration,
Figure 19 is a schematic representation of a transversal cross-section of a vertical tail plane of an aircraft comprising an embodiment of a device according to the invention, in a first configuration,
Figure 20 is a schematic representation corresponding to the embodiment shown in figure 19, in a second configuration.

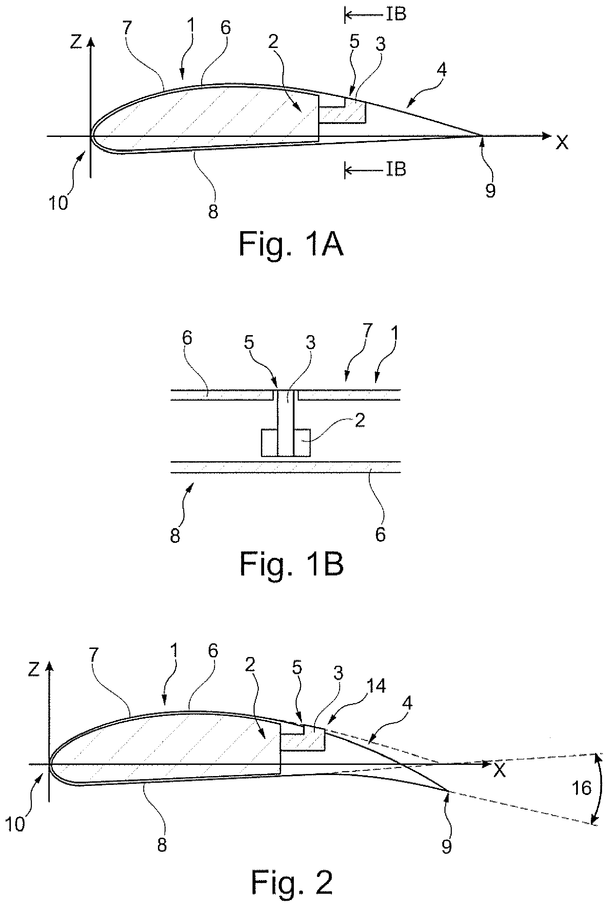

In figures 1A and 1B a wing 1 is represented in a first configuration corresponding to a cruise speed of a plane. In such configuration, the wing 1 has a limited curvature adapted to provide lift with a minimum drag. The air flow flowing along the intrados 8 is not deflected.

The chord axis X and the thickness axis Z are represented as referential between each of the three configurations represented in figure 1A, 2 and 3A.

The wing 1 comprises a frame 2 comprising for example a rib. A skin 6 is attached to the frame 2 so as to cover it and form an aerodynamic surface. The wing comprises a leading edge 10 and a trailing edge 9 between which extend an extrados 7 and an intrados 8.

The trailing portion of the wing comprises a motile portion 4 in the form of a morphing portion of the wing. The motile portion may for example be a flap. In this embodiment, the skin 6 may be semi-rigid. The skin of the motile portion 4 of the wing 1 may be actuated by different techniques such as local actuators or actuated elements articulated with the frame such as for example an actuated trailing portion of a rib. The trailing portion of the wing may also comprise elements comprising memory shape materials so that their shape may change under a given stimulus such as for example a given temperature reached by heating.

The frame 2 comprises a disturbing structure 3 integral with the rest of the frame.

In the embodiment represented in figures 1A and 1B the skin 6 comprises an aperture 5 which is filled by the disturbing structure 3. The disturbing structure 3 has an outer surface which forms a continuous aerodynamic surface with the skin 6. Therefore in this first configuration, the aerodynamic surface of the wing, in particular the surface of the extrados 8 is continuous, smooth and doesn't present high local variations of curvature. It is adapted for example to a flow of air at an aircraft cruise speed and with a small angle of attack.

In figure 2, the motile portion 4 of the wing 1 has been actuated so that the wing is placed in a second configuration which presents a transversal cross-section with a higher curvature in relation to the first configuration. The motile portion 4 representing a trailing portion of the wing is adapted to deflect an air flow flowing from the leading edge 10 towards the trailing edge 9 with a first deflecting angle 16. In this second configuration a higher lift is obtained in relation to the first configuration, due to the higher deflections of air flow on the extrados 7 and on the intrados 8.

In this second configuration, the disturbing structure 3 protrudes from the skin's outer surface. The global aerodynamic surface of the wing therefore comprises a local discontinuity where the disturbing structure 3 protrudes from the wing.

The invention presents the benefit that the disturbing structure 3 requires no actuation. Thereby the outer shape of the aerodynamic surface is modified between a first position of the motile portion and a second position of the motile portion, without additional motile portion than the motile portion itself. The aerodynamic surface of a device according to the invention, and of an aircraft may thus be locally modified depending on the global shape adopted by said aerodynamic surface. Moreover the local shape of the aerodynamic surface directly depends on the global shape of the aerodynamic surface.

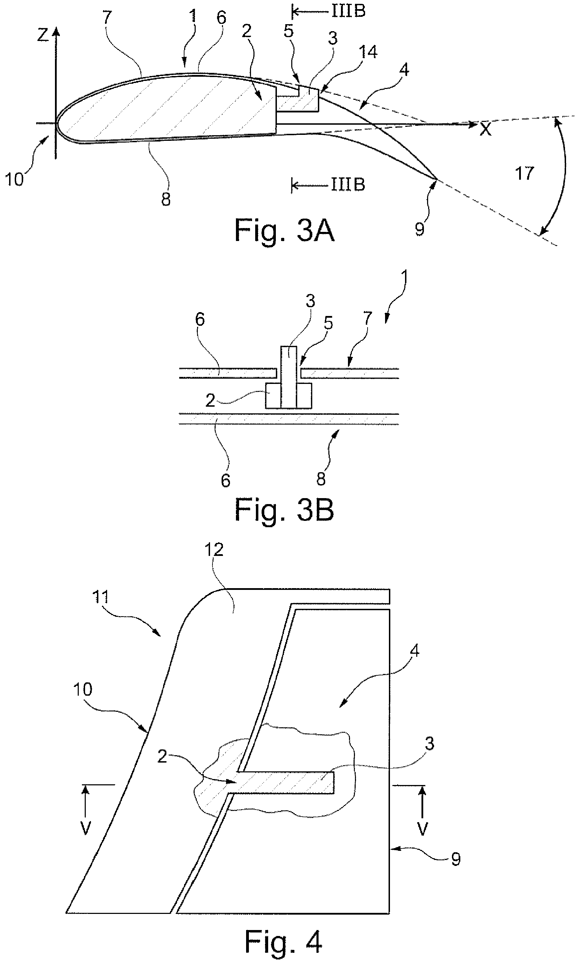

In relation to this embodiment, it may be noted that the disturbing structure 3 may have different shapes. It may for example have a cylindrical section, a cuboid section, or another section. Although in the embodiment represented on figure 3B, the disturbing structure 3 is local, the disturbing structure 3 may also be linear so that it extends along at least a portion of the wing span, thus forming a rib on the extrados 8 of the wing 1 when it protrudes from it. The local protrusion (or bump) formed at the discontinuity between the surface of the disturbing structure 3 and the skin 6 may allow the formation of local vortices in an air flow flowing from the leading edge 10 towards the trailing edge 9, more particularly from the disturbing structure 3 towards the trailing edge 9. These vortices permit the boundary layer of the air flow to stay along the surface of the wing even at high angles of attack so that the air flow does not separate and/or stall.

In the third configuration of the figures 3A and 3B, the deflection of the motile portion 4 is amplified compared to the second configuration. The first position of the motile skin 4 is represented on figures 2 and 3A in dotted lines for comparison with the second and third positions of figures 2 and 3A respectively.

As represented on figures 3A and 3B, in this third configuration of the motile portion 4, the disturbing structure 3 emerges from an aperture 5 in the skin 6 of the wing 1.

In the third configuration, the trailing portion of the wing forms a deflection angle 17 bigger than the angle 16, such that the disturbing structure 3 protrudes more from the skin 6. This configuration may correspond for example to the configuration of an airplane wing at landing, providing a high deflection of air flow to provide the airplane with a high lift at low speed.

On figures 4, 5 and 6, a vertical tail plane 11 according to the invention is represented. The vertical tail plane comprises a fore portion 12 or vertical stabilizer, which is fixed in relation to a frame of the plane and to the fuselage. In fact the fore portion of the vertical tail plane comprises a frame 2 and a skin covering the frame to form an aerodynamic surface with a leading edge 10.

The vertical tail plane comprises a trailing edge portion comprising a rudder. The rudder is the motile portion 4 of the vertical tail plane. The rudder 4 comprises a trailing edge 9. The rudder is motile and actuated around a rotation axis 15.

The rudder comprises a skin 6. The skin 6 comprises at least a flexible, elastic portion, called the deformable skin 13.

Moreover the frame 2 comprises a disturbing structure 3 which is integral with the frame 2. The disturbing structure 3 extends into the rudder 4. The disturbing structure 3 presents an anvil shape with an extremity which is wider than its basis.

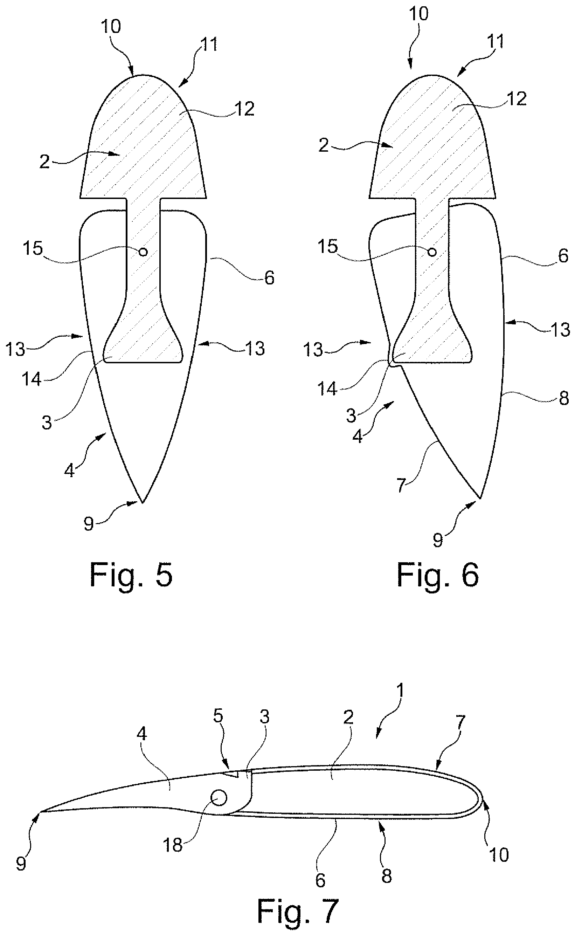

In the first configuration represented on figure 5, the rudder 4 is in a neutral position whereby, when placed in an air flow, it does not deflect the air flow towards one side or another. In this first configuration, the disturbing structure 3 is not solicited and does not influence the shape of the skin 6.

In the second configuration represented on figure 6 corresponding to a second position of the rudder 4. The rudder is rotated around the rotation axis 15 so that it may deflect an air flow flowing around the vertical tail plane 11. Thus in relation to the air flow, it may be considered that an extrados 7 and an intrados 8 are formed respectively on each side of the rudder 4.

In this second configuration, the extrados 7 of the skin 6 has been brought against the disturbing structure 3 by the rotation of the rudder 4. As the skin 6 comprises in this area a deformable skin 13, the deformable skin 13 adopts partially the shape of the disturbing structure 3. Thereby the deformable skin forms a local protrusion, or bump 14, on the extrados 7. Such bump may provoke the formation of a local vortex in an air flow flowing around the vertical tail plane from its leading edge 10 to its trailing edge 9 on the rudder 4. As above described, the local vortex may help the boundary layer of air to remain along the aerodynamic surface of the rudder - thereby avoiding stall - up until higher angles of deflection than with a generally smooth extrados 7.

Similarly, when the rudder 4 is actuated to the opposite side, the deformable skin 13 of the opposite side of the rudder 4 will be restrained to form a local bump on the skin 6 of the rudder.

In figure 7, another embodiment of the invention is represented. A wing 1 is represented in a first configuration corresponding for example to a cruise speed of a plane. In such configuration, the wing 1 has a limited curvature adapted to provide lift with a minimum drag. The air flow flowing along the intrados 8 is not deflected.

The wing 1 comprises a frame 2 comprising for example a rib. A skin 6 is attached to the frame 2 so as to cover it and form an aerodynamic surface. The wing comprises a leading edge 10 and a trailing edge 9 between which extend an extrados 7 and an intrados 8.

The trailing portion of the wing comprises a motile portion 4. The motile portion may for example be a rigid or semi-rigid flap. In this embodiment, the skin 6 may be rigid.

The motile portion 4 may be actuated by different techniques such as local actuators or actuated elements articulated with the frame such as for example an actuated trailing portion of a rib. The trailing portion of the wing may also comprise elements comprising memory shape materials so that their shape may change under a given stimulus such as for example a given temperature reached by heating. In this embodiment, the motile portion is articulated compared to the frame 2 in rotation around a rotation axis 18.

The motile portion 4 comprises a disturbing structure 3 which is motile compared to the frame 2. In particular the disturbing structure 3 may be integral with the motile portion 4 such that it is displaced with the motile portion 4. The invention presents the benefit that the disturbing structure 3 requires no dedicated actuation.

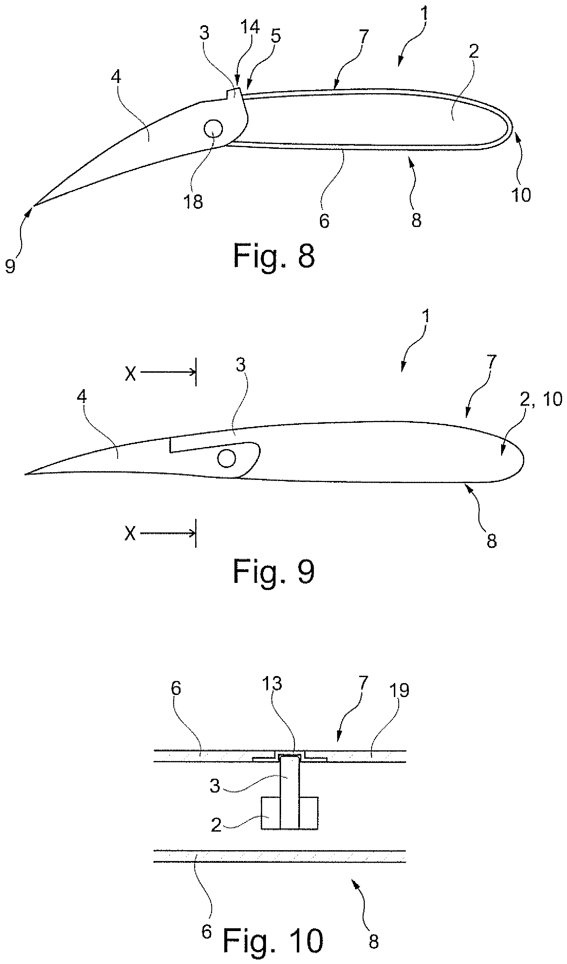

The disturbing structure 3 is arranged on a front portion of the motile portion 4, in particular in front of a rotation axis 18 of the motile portion 4, such that the disturbing structure is within the aerodynamic envelope of the wing in a first configuration such as represented on figure 7, but emerges locally from the aerodynamic envelope of the wing in a second configuration such as represented in figure 8.

In the embodiment represented in figure 7 the skin 6 comprises an aperture 5 which is filled by the disturbing structure 3. The disturbing structure 3 has an outer surface which forms a continuous aerodynamic surface with the skin 6. Therefore in this first configuration, the aerodynamic surface of the wing, in particular the surface of the extrados 8 is continuous, smooth and doesn't present high local variations of curvature. It is adapted for example to a flow of air at an aircraft cruise speed and with a small angle of attack.

In figure 8, the motile portion 4 of the wing 1 has been actuated so that the wing is placed in a second configuration which presents a transversal cross-section with a higher curvature in relation to the first configuration. The motile portion 4 representing a trailing portion of the wing is adapted to deflect an air flow flowing from the leading edge 10 towards the trailing edge 9. In this second configuration a higher lift is obtained in relation to the first configuration, due to the higher deflections of air flow on the extrados 7 and on the intrados 8.

In this second configuration, the disturbing structure 3 protrudes from the skin's outer surface. The global aerodynamic surface of the wing therefore comprises a local discontinuity where the disturbing structure 3 protrudes.

The height of the protrusion depends on the relative position of the motile portion 4 and of the frame 2. The more the motile portion is displaced towards increasing the curvature of the wing, the more the disturbing structure 3 protrudes.

Again in this embodiment, the disturbing structure 3 may have different shapes and may be local or linear so that it extends along at least a portion of the wing span, thus forming a rib on the wing 1 when it protrudes from it. The local protrusion (or bump) formed at the discontinuity between the surface of the disturbing structure 3 and the skin 6 may allow for the formation of local vortices in an air flow flowing from the leading edge 10 towards the trailing edge 9. These vortices permit the boundary layer of the air flow to stay along the surface of the wing even at high angles of attack so that the air flow does not separate and/or stall.

In figures 9 and 10, another embodiment of the invention is represented. A wing 1 is represented in a first configuration corresponding for example to a cruise speed of a plane. In such configuration, the wing 1 has a limited curvature adapted to provide lift with a minimum drag. The air flow flowing along the intrados 8 is not deflected.

The wing 1 comprises a frame 2 comprising for example a rib. A skin 6 is attached to the frame 2 so as to cover it and form an aerodynamic surface. The wing comprises a leading edge 10 and a trailing edge 9 between which extend an extrados 7 and an intrados 8.

The front portion of the wing is in this embodiment fixed compared to the frame, and in particular the skin 6 of the front portion of the wing 1 is in this embodiment attached fixedly to the frame 2. However, in other embodiments according to the invention, the skin 6 of the fore portion of a wing or of another aerodynamic device may not be fixed to the frame 2.

The trailing portion of the wing comprises a motile portion 4 which also comprises a skin 6. The motile portion may for example be a rigid or semi-rigid flap. In this embodiment, the skin 6 may be rigid and comprise a deformable portion 13 at least at a junction between the motile portion 4 and a front portion of the wing.

The motile portion 4 may be actuated by different techniques such as local actuators or actuated elements articulated with the frame such as for example an actuated trailing portion of a rib. The trailing portion of the wing may also comprise elements comprising memory shape materials so that their shape may change under a given stimulus such as for example a given temperature reached by heating. In this embodiment, the motile portion is articulated compared to the frame 2 in rotation around a rotation axis 18.

The wing 1 comprises a disturbing structure 3 which is fixed in relationship to the frame 2. In particular the disturbing structure 3 may be integral with the frame 2. The invention presents the benefit that the disturbing structure 3 requires no dedicated actuation.

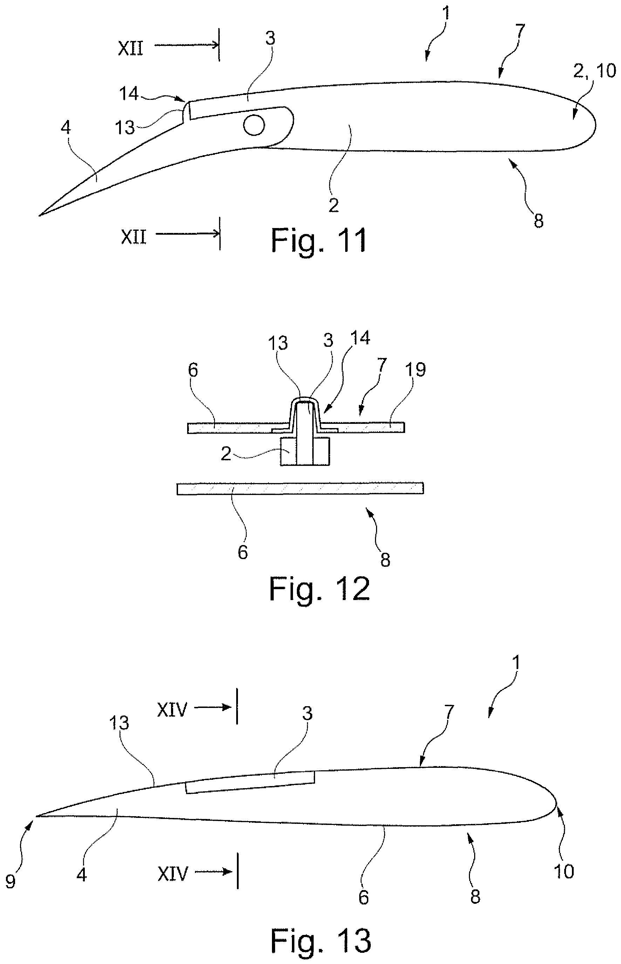

The disturbing structure 3 is arranged in an aft portion of the frame 2, in particular behind a rotation axis 18 of the motile portion 4, such that the disturbing structure 3 is within the aerodynamic envelope of the wing 1 in a first configuration such as represented on figure 9 and figure 10, but emerges locally from the aerodynamic envelope of the wing 1 in a second configuration such as represented in figures 11 and 12.

In the embodiment represented in figures 9 to 12 the skin 6 comprises a deformable portion, called deformable skin 13. The deformable skin 13 may beneficially be elastic. The deformable skin 13 is arranged on the motile portion 4 in the vicinity of the disturbing structure 3.

The deformable skin 13 is supported by the disturbing structure 3 in a first configuration represented by figures 9 and 10. This minimizes the deformation of the deformable skin 13 under the influence of external elements such as air turbulences. To improve this aspect, the deformable skin 13 may at least partially be attached to the disturbing structure 3 such that the disturbing structure 3 not only supports the deformable skin in a first direction, but also retains the deformable skin in a second direction opposite the first direction.

In the first configuration, the wing thus has an outer surface which forms a continuous aerodynamic surface, in which the deformable skin 13 is smooth with the rest of the skin 6 of the wing and has a low degree of curvature locally, except for the leading edge 10 and the trailing edge 9. Therefore in this first configuration, the aerodynamic surface of the wing, in particular the surface of the extrados 8 is continuous, smooth and does not present high local variations of curvature. It is adapted for example to a flow of air at an aircraft cruise speed and with a small angle of attack.

In figures 11 and 12, the motile portion 4 of the wing 1 has been actuated so that the wing is placed in a second configuration which presents a transversal cross-section with a higher curvature in relation to the first configuration. The motile portion 4 representing a trailing portion of the wing is adapted to deflect an air flow flowing from the leading edge 10 towards the trailing edge 9. In this second configuration a higher lift is obtained in relation to the first configuration, due to the higher deflections of air flow on the extrados 7 and on the intrados 8.

In this second configuration, the disturbing structure 3, being fixed to the frame, induces a deformation of the deformable skin 13 of the motile portion as the motile portion is actuated around the axis 18, such that the disturbing structure 3 and the deformable skin 13 protrude locally to form a bump 14 with a high local curvature variation of the aerodynamic surface. The aerodynamic surface of the wing therefore comprises a high local curvature variation where the disturbing structure 3 induces the deformable skin 13 to protrude.

The height of the protrusion depends on the relative position of the motile portion 4 and of the frame 2. The more the motile portion is displaced towards increasing the curvature of the wing, the more the disturbing structure 3 protrudes.

In this embodiment, the disturbing structure represented is local in the spanwise direction, however, the disturbing structure 3 may have different shapes and may be local or linear so that it extends along at least a portion of the wing span, thus forming a rib on the wing 1 when it protrudes from it. The local protrusion (or bump) formed on the surface of the skin 6 may allow for the formation of local vortices in an air flow flowing from the leading edge 10 towards the trailing edge 9. These vortices permit the boundary layer of the air flow to stay along the surface of the wing even at high angles of attack so that the air flow does not separate and/or stall.

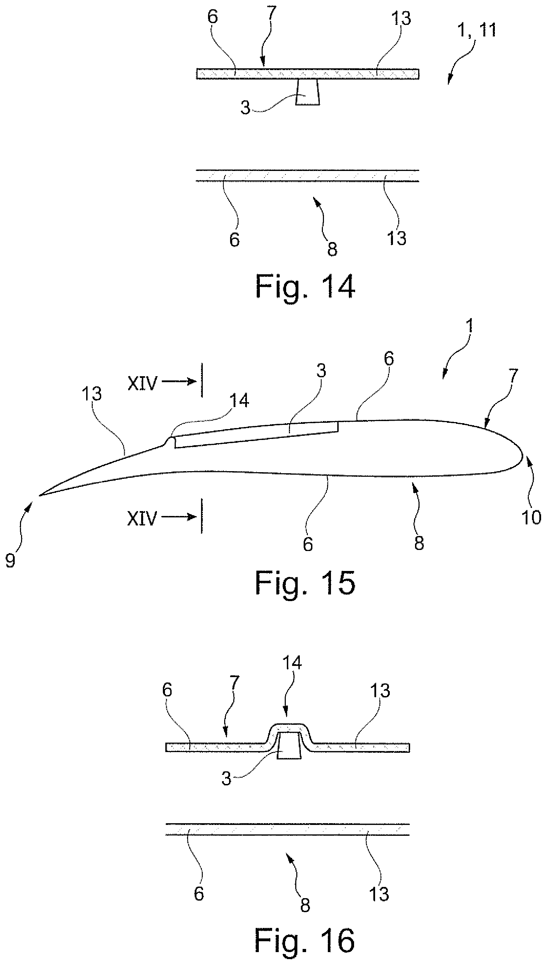

In figures 13 and 15, yet another embodiment of the invention is represented. A wing 1 is represented in a first configuration corresponding for example to a cruise speed of a plane. In such configuration, the wing 1 has a limited curvature adapted to provide lift with a minimum drag. The air flow flowing along the intrados 8 is not deflected.

The wing 1 comprises a frame (not represented) comprising for example a rib. A skin 6 is attached to the frame 2 so as to cover it and form an aerodynamic surface, but in this embodiment, the skin 6 may deform such that the wing may be a morphing wing. In particular the skin 6 may be a deformable skin 13 such as a flexible and/or elastic skin. The skin 6 may be actuated by different techniques such as local actuators or actuated elements articulated with the frame. The wing may also comprise elements comprising memory shape materials so that their shape may change under a given stimulus such as for example a given temperature reached by heating. The skin itself may comprise memory shape material.

In this embodiment, the motile portion 4 may be considered to the be the entire skin 6, the skin 6 being articulated compared to the frame.

The wing comprises a leading edge 10 and a trailing edge 9 between which extend an extrados 7 and an intrados 8.

The wing 1 comprises a disturbing structure 3 which is fixed to the skin 6. The disturbing structure 3 may be a stiffener which reduces locally the deformability, in particular the flexibility and/or the elasticity of the skin 6. The invention presents the benefit that the disturbing structure 3 requires no dedicated actuation.

In this embodiment, the disturbing structure 3 is arranged along the extrados of the wing, on an inner face of the skin 6.

The disturbing structure 3, by stiffening locally the skin 6, may minimize the deformation of the deformable skin 6 under the influence of external elements such as air turbulences.

In a first configuration represented , the wing thus has an outer surface which forms a continuous aerodynamic surface, in which the deformable skin 13 is smooth with the rest of the skin 6 of the wing and has a low degree of curvature locally, except for the leading edge 10 and the trailing edge 9. Therefore in this first configuration, the aerodynamic surface of the wing, in particular the surface of the extrados 8 is continuous, smooth and does not present high local variations of curvature. It is adapted for example to a flow of air at an aircraft cruise speed and with a small angle of attack.

In figures 15 and 16, the wing 1 has been actuated - in particular the skin 6 of the wing has been deformed - so that the wing is in a second configuration which presents a transversal cross-section with a higher curvature in relation to the first configuration. The trailing portion of the wing is adapted to deflect an air flow flowing from the leading edge 10 towards the trailing edge 9. In this second configuration a higher lift is obtained in relation to the first configuration, due to the higher deflections of air flow on the extrados 7 and on the intrados 8.

In this second configuration, the disturbing structure 3, being fixed to the skin 6, induces a deformation of the deformable skin as the skin is morphed towards the second configuration, such that the skin 13 comprises a local protrusion 14 forming a high local curvature variation of the aerodynamic surface. The aerodynamic surface of the wing therefore comprises a high local curvature variation where the disturbing structure 3 induces the deformable skin 13 to protrude. In this embodiment, the disturbing structure is represented as an elongated element extending along the chord, such that the protrusion 14 may have the form of a rib extending in the chord direction. the aft end of the disturbing structure also induces a high local variation of curvature such that the air flowing along the extrados may be influenced so as to form a vortex.

The height of the protrusion may depends on the difference of deformability between the skin 6 and the disturbing structure. In particular the height and shape of the protrusion 14 may depend on the stiffening induced by the disturbing structure on the skin 6.

In this embodiment, the disturbing structure represented is elongated in the chordwise direction, however, the disturbing structure 3 may have different shapes and may be local or linear so that it extends along at least a portion of the wing span, thus forming a rib on the wing 1. The local protrusion (or bump) formed on the surface of the skin 6 may allow for the formation of local vortices in an air flow flowing from the leading edge 10 towards the trailing edge 9. These vortices permit the boundary layer of the air flow to stay along the surface of the wing even at high angles of attack so that the air flow does not separate and/or stall.

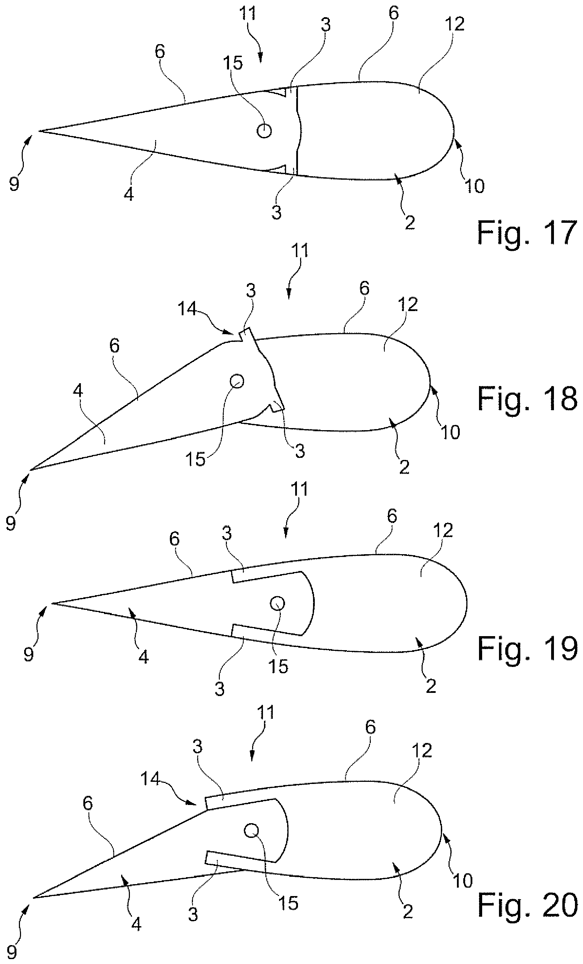

On figures 17 and 18 a vertical tail plane 11 according to the invention is represented. The vertical tail plane comprises a fore portion 12 which is fixed in relation to a frame of the plane and to the fuselage. In fact the fore portion of the vertical tail plane comprises a frame 2 and a skin covering the frame to form an aerodynamic surface with a leading edge 10.

The vertical tail plane comprises a trailing edge portion comprising a rudder. The rudder is the motile portion 4 of the vertical tail plane. The rudder 4 comprises a trailing edge 9. The rudder is motile and actuated around a rotation axis 15.

The rudder comprises a skin 6.

In this embodiment, the rudder 4 comprises at least two disturbing structures 3, respectively on each side of the rudder, and therefore on each side of the vertical tail plane 11.

The disturbing structures 3 may be placed symmetrically on each side of the rudder 4.

The disturbing structures 3 are placed towards the fore front of the rudder 4. The disturbing structures 3 are configured such that:
- in the first configuration represented on figure 17, the two disturbing structures 3 are within the envelope of the vertical tail plane 11, and in particular within the envelope of the skin 6 of the fore portion 12,
- in the second configuration, in which the rudder 4 is rotated around an axis 15 so as to deflect an airflow along the vertical tail place 11, as represented on figure 18, one of the disturbing structure 3 extends beyond the envelope of the vertical tail plane 11, and in particular beyond the envelope of the skin 6 of the fore portion 12, such that it forms a bump 14 on the aerodynamic surface, and in particular on a streamline of airflow along the skin 6 of the vertical tail plane. Vortices may thus be created in the streamline of air. Such bump 14 may provoke the formation of a local vortex in an air flow flowing around the vertical tail plane from its leading edge 10 to its trailing edge 9 on the rudder 4. As above described, the local vortex may help the boundary layer of air to remain along the aerodynamic surface of the rudder - thereby avoiding stall - up until higher angles of deflection than with a generally smooth extrados 7.

In this embodiment, the disturbing structures 3 are placed in front of the rotation axis 15 so as to emerge as a bump 14 from the aerodynamic envelope of the vertical tail plane 11 when the rudder is rotated.

The disturbing structures 3 may be configured such that they only emerge from the aerodynamic envelope for angles of the rudder higher than a predetermined angle.

The disturbing structures 3 may emerge from the aerodynamic surface through an opening in the skin 6 of the fore portion 12 of the vertical tail plane 11, or the skin 6 of the fore portion 12 may be locally deformable such that under the effect of the disturbing structure, the deformable skin is deformed so as to form a bump on the aerodynamic surface.

The disturbing structures 3 may be punctual along the length of the rudder, or may form a rib along the rudder 4.

There may be one or more disturbing structure 3 on each side of the rudder 4. A plurality of disturbing structures may be arranged spanwise and/or chordwise.

On figures 19 and 20 a vertical tail plane 11 according to the invention is represented. The vertical tail plane comprises a fore portion 12 which is fixed in relation to a frame of the plane and to the fuselage. In fact the fore portion of the vertical tail plane comprises a frame 2 and a skin covering the frame to form an aerodynamic surface with a leading edge 10.

The vertical tail plane comprises a trailing edge portion comprising a rudder. The rudder is the motile portion 4 of the vertical tail plane. The rudder 4 comprises a trailing edge 9. The rudder is motile and actuated around a rotation axis 15.

The rudder comprises a skin 6.

In this embodiment, the fore portion 12 comprises at least two disturbing structures 3, respectively on each side of the rudder, and therefore on each side of the vertical tail plane 11.

The disturbing structures 3 may be placed symmetrically on each side of the fore portion 12.

The disturbing structures 3 are placed towards the aft of the fore portion 12. The disturbing structures 3 are configured such that:
- in the first configuration represented on figure 19, the two disturbing structures 3 are within the envelope of the vertical tail plane 11, and in particular within the envelope of the skin 6 of the rudder 4,
- in the second configuration, in which the rudder 4 is rotated around an axis 15 so as to deflect an airflow along the vertical tail place 11, as represented on figure 18, one of the disturbing structure 3 extends beyond the envelope of the vertical tail plane 11, and in particular beyond the envelope of the skin 6 of the rudder 4, such that it forms a bump 14 on the aerodynamic surface, and in particular on a streamline of airflow along the skin 6 of the vertical tail plane. Vortices may thus be created in the streamline of air. Such bump 14 may provoke the formation of a local vortex in an air flow flowing around the vertical tail plane from its leading edge 10 to its trailing edge 9. As above described, the local vortex may help the boundary layer of air to remain along the aerodynamic surface of the rudder - thereby avoiding stall - up until higher angles of deflection than with a generally smooth extrados 7.

In this embodiment, the disturbing structures 3 are arranged as aft extensions of the fore portion 12 towards the rudder 4, such that when the rudder is rotated the aerodynamic envelope has a bump 14 (which can also be seen a a recess in this embodiment). To do so, the disturbing structures 3 are placed behind the rotation axis 15 towards the trailing edge 9, so as to emerge as a bump 14 from the aerodynamic envelope of the vertical tail plane 11 when the rudder is rotated.

The disturbing structures 3 may emerge from the aerodynamic surface through an opening in the skin 6 of the rudder 4 of the vertical tail plane 11, or the skin 6 of the rudder 4 may be locally deformable such that under the effect of the disturbing structure, the deformable skin is deformed so as to form a bump on the aerodynamic surface.

The disturbing structures 3 may be punctual along the length of the fore portion, or may form a rib along the fore portion 12.

There may be one or more disturbing structure 3 on each side of the fore portion 12. A plurality of disturbing structures may be arranged spanwise and/or chordwise.

The invention is not limited to the specific embodiments herein disclosed as examples. The invention also encompasses other embodiments not herein explicitly described, which may comprise various combinations of the features herein described.

Also the invention may be applied to devices in other fluids such as water for example. The invention may be adapted to an hydrodynamic device.

## Claims

1. Aerodynamic device (1, 11) comprising:
- a frame (2),
- a skin (6):
• having an outer surface forming at least part of an aerodynamic surface,
• at least partially connected to the frame (2), and
• comprising a motile portion (4) adapted to be displaced between:
∘ a first position in relation to the frame (2), in which the aerodynamic surface exhibits a first shape,
∘ a second position in relation to the frame (2), the second position being different from the first position,
**characterized in that**:
- it comprises a disturbing structure (3),
- in the second position of the motile portion (4), the aerodynamic surface exhibits a second shape, different from the first shape, in which the disturbing structure (3) induces a protrusion (14) on the aerodynamic surface.

2. Device according to claim 1, further **characterized in that** the disturbing structure (3) is fixed in relation to the frame (2).

3. Device according to claim 1, further **characterized in that** the disturbing structure (3) is fixed in relation to the motile portion (4).

4. Device according to any of claim 1 to 3, further **characterized in that** the skin (6) comprises a deformable portion, called deformable skin (13).

5. Device according to claim 4, further **characterized in that** the skin (6) is entirely deformable.

6. Device according to any of claim 4 or 5, further **characterized in that**:
- in the first position of the motile portion (4), the deformable skin (13) has a first shape,
- in the second position of the motile portion (4), the deformable skin (13) is at least partially restrained by the disturbing structure (3), such that the deformable skin (13) has a second shape, different from the first shape.

7. Device according to any of claim 4 to 6, further **characterized in that** the disturbing structure (3):
- is at least partially attached to the deformable skin (13),
- is adapted to modify locally the deformability of the deformable skin (13).

8. Device according to any of claim 4 to 7, further **characterized in that**, in the first position of the motile portion (4), the disturbing structure (3) at least partially supports the deformable skin (13) in its first shape.

9. Device according to any of claim 4 to 8, further **characterized in that** the deformable skin (13) comprises a slit and, in the second position of the motile portion, the disturbing structure restrains a first side of the slit differently that the second side of the slit.

10. Device according to any of claim 1 to 9, further **characterized in that**:
- the skin (6) comprises an aperture (5),
- in the first position of the motile portion (4), the skin and a surface of the disturbing structure (3) form a continuous aerodynamic surface,
- in the second position of the motile portion, the skin and a surface of the disturbing structure form a discontinuous aerodynamic surface.

11. Device according to any of claim 1 to 10, further **characterized in that**, in the second position of the motile portion (4), the disturbing structure (3) protrudes from the skin (6).

12. Device according to any of claim 1 to 11, further **characterized in that** the motile portion (4) forms at least part of a trailing edge of a wing (1).

13. Device according to any of claim 1 to 12, further **characterized in that** it comprises a plurality of disturbing structures (3).

14. Wing for an aircraft comprising at least one device according to any of claim 1 to 13.

15. Aircraft comprising at least one device (1, 11) according to any of claim 1 to 13.
